# EUROPÄISCHE PATENTANMELDUNG

(11) **EP 3 006 193 A1**
(43) Veröffentlichungstag der Anmeldung: **13.04.2016**
(21) Anmeldenummer: 14187743.1
(22) Anmeldetag: 06.10.2014
(51) Int. Cl.: B29C 70/52, B29L 31/22

(54) **Verfahren zum Herstellen von Scharnieren**

(71) Anmelder: Magna Steyr Fahrzeugtechnik AG & Co KG, 8041 Graz (AT)
(72) Erfinder: Erlacher, Manuel, 9545 Radenthein (AT); Krammer, Christoph, 8530 Deutschlandsberg (AT); Zachnegger, Harald, 8041 Graz (AT)
(74) Vertreter: Zangger, Bernd

(57) **Zusammenfassung**

Ein Verfahren zum Herstellen von Scharnieren aus faserverstärktem Kunststoff, wobei ein im wesentlichen flaches Pultrusionsprofil (1) erstellt wird und durch Ablängen des Pultrusionsprofils (1) und durch Trennen in Längsrichtung die einzelnen Scharnierhälften (2, 3) aus dem Pultrusionsprofil (1) gebildet werden, wobei zur Bildung von Scharnieraugen (4, 5) bei der Herstellung des Pultrusionsprofils (1) Faserlagen (6) an beiden seitlichen Enden des Pultrusionsprofils (1) in Umfangsbahnen um die Positionen (7) der Scharnieraugen (4, 5) geführt werden.

## Beschreibung

### Gebiet der Erfindung

Die vorliegende Erfindung betrifft ein Verfahren zum Herstellen von Scharnieren aus faserverstärktem Kunststoff.

### Stand der Technik

Es sind bereits Verfahren zum Herstellen von Scharnieren bekannt, wobei zunächst ein Profilstück kontinuierlich als Strang gepresst wird aus welchem durch Schnitte Scharnierhälften gebildet werden, die sich ineinanderstecken lassen. In der DE 1 061 227 wird ein solches Profilstück durch einen mäanderförmigen Schnitt in Scharnierhälften mit versetzt zueinander liegenden Hülsen abgeteilt. Eine wulstartige Verdickung die später als Scharnierauge dient ist dazu mittig im Profilstück verlaufend angeordnet.

Bekannt ist ferner das Herstellen von Profilen mittels Pultrusion. Das Pultrusionsverfahren oder pultrudieren (auch Strangziehverfahren genannt) ist ein kontinuierliches Herstellungsverfahren zur Fertigung von faserverstärkten Kunststoffprofilen.

### Zusammenfassung der Erfindung

Es ist eine Aufgabe der Erfindung, ein Verfahren zum Herstellen von Scharnieren aus faserverstärktem Kunststoff anzugeben, das eine einfache und kostengünstige Herstellung und dabei eine hohe Festigkeit der Scharniere ermöglicht.

Die Lösung der Aufgabe erfolgt durch eine Verfahren zum Herstellen von Scharnieren aus faserverstärktem Kunststoff, wobei ein im wesentlichen flaches Pultrusionsprofil erstellt wird und durch Ablängen des Pultrusionsprofils und durch Trennen in Längsrichtung die einzelnen Scharnierhälften aus dem Pultrusionsprofil gebildet werden, wobei zur Bildung von Scharnieraugen bei der Herstellung des Pultrusionsprofils Faserlagen an beiden seitlichen Enden des Pultrusionsprofils in Umfangsbahnen um die Positionen der Scharnieraugen geführt werden.

Erfindungsgemäß wird zunächst in einem Pultrusionswerkzeug ein Pultrusionsprofil erstellt, das danach durch Trennen in Querrichtung (Ablängen) auf die Höhe der einzelnen Scharniere zugeschnitten wird. Die beiden seitlichen Enden der dabei gewonnenen Zwischenprodukte werden später als Scharnieraugen verwendet. Deshalb werden an diesen seitlichen Positionen mehrere Lagen von Fasern, die zusammen mit einer Matrix den faserverstärkten Kunststoff der Scharniere bilden, in unterschiedlichen Kreisbögen, also je nach Lage unterschiedlichen Umfangsbahnen um die seitlichen Positionen der späteren Scharnieraugen geführt. Hierdurch wird an diesen für das Scharnier wesentlichen Positionen eine besonders hohe Festigkeit des Bauteils erreicht. Beim Trennen der beiden Scharnierhälften des Zwischenproduktes bzw. des Pultrusionsprofils werden durch die seitliche Anordnung der Scharnieraugen die Fasern um die Scharnieraugen auch nicht zerstört.

Die zeitliche Abfolge des Trennens des Pultrusionsprofils in Querrichtung und Längsrichtung kann erfindungsgemäß auch umgekehrt sein, sodass das Profil zunächst in Längsrichtung geschnitten und danach abgelängt wird.

Der faserverstärkte Kunststoff kann beispielsweise eine Glasfaser, Carbonfaser oder Mischfaser umfassen, die beispielsweise in Form von Rovings, Geweben oder Geflechten eingesetzt werden.

Weiterbildungen der Erfindung sind in den abhängigen Ansprüchen, der Beschreibung sowie den beigefügten Zeichnungen angegeben.

Bevorzugt werden die Faserlagen, die zur Bildung von Scharnieraugen an beiden seitlichen Enden des Pultrusionsprofils um die Positionen der Scharnieraugen geführt werden, durch Fasermatten gebildet.

Die Fasermatten werden besonders bevorzugt an beiden seitlichen Enden des Pultrusionsprofils multidirektional verlegt, wobei die Faserlagen insbesondere jeweils 45 Grad oder 90 Grad zueinander verdreht sind. Hierdurch wird eine weitere Erhöhung der Festigkeit der Scharnieraugen erreicht.

Die Länge der Fasermatten entspricht dabei vorzugsweise der jeweiligen Umfangsbahn, besonders bevorzugt mit einem zusätzlichen Übermaß. Die Fasermatten sind also etwas größer als die Scharnieraugen ausgeführt. Hierdurch ist es möglich, dass in den übrigen Bereichen des Scharniers unidirektionale Fasern verwendet werden, wobei die Fasermatten in einem Übergangsbereich in die Lagen unidirektionaler Fasern eingebettet sind.

Dabei können in einer Ausführungsvariante die Bohrungen der Scharnieraugen mitpultrudiert werden. In einer anderen Ausführungsvariante werden die Bohrungen der Scharnieraugen erst nach dem Pultrudieren durch Bohren erzeugt. Natürlich können bereits durch pultrudieren vorgefertigte Bohrungen später weiter aufgebohrt werden oder nachträglich gehont werden.

Bevorzugt erfolgt nach dem Ablängen und/oder nach dem Trennen ein Beschneiden des Pultrusionsprofils im Bereich der Scharnieraugen, um jeweils zueinander passende Scharnieraugen der beiden Scharnierhälften zu gewinnen. Dabei entsteht in der Regel ein rechteckiger oder quadratischer Verschnitt.

Weiters können normal auf die Fläche des Pultrusionsprofils weitere Bohrungen zur Schaffung von Anschraubpunkten durchgeführt werden.

Das Ablängen und/oder das Trennen und/oder weiteres Beschneiden des Pultrusionsprofils können insbesondere mittels Laser oder Wasserstrahl erfolgen.

Bevorzugt wird in ein Scharnierauge einer der Scharnierhälften jeweils eine Buchse als Gleitlager eingelegt. Überstehende Buchsenenden können mit einem Werkzeug umgebogen werden.

Die beiden Scharnierhälften werden bevorzugt jeweils mit einem Spannstift verbunden, der durch die Scharnieraugen der beiden Scharnierhälften geführt wird.

Die Verbindung der beiden Scharnierhälften zu einem fertigen Scharnier kann erfindungsgemäß jedoch auch auf andere dem Fachmann bekannte Weisen erfolgen und beispielsweise weitere Schrauben, Hülsen, Gewindebuchsen etc. verwenden.

### Kurzbeschreibung der Zeichnungen

Die Erfindung wird im Folgenden beispielhaft unter Bezugnahme auf die Zeichnungen beschrieben.
- Fig. 1: ist eine schematische Ansicht von ersten Schritten in einem erfindungsgemäßen Verfahren zum Herstellen von Scharnieren aus faserverstärktem Kunststoff.
- Fig. 2: ist eine schematische Ansicht von weiteren Schritten in einem erfindungsgemäßen Verfahren zum Herstellen von Scharnieren aus faserverstärktem Kunststoff.
- Fig. 3: ist eine schematische Schnittdarstellung eines Endes einer erfindungsgemäß hergestellten Scharnierhälfte.
- Fig. 4: ist eine schematische dreidimensionale Darstellung eines Pultrusionsprofils in verschiedenen Phasen eines erfindungsgemäßen Herstellungsverfahrens.

### Detaillierte Beschreibung der Erfindung

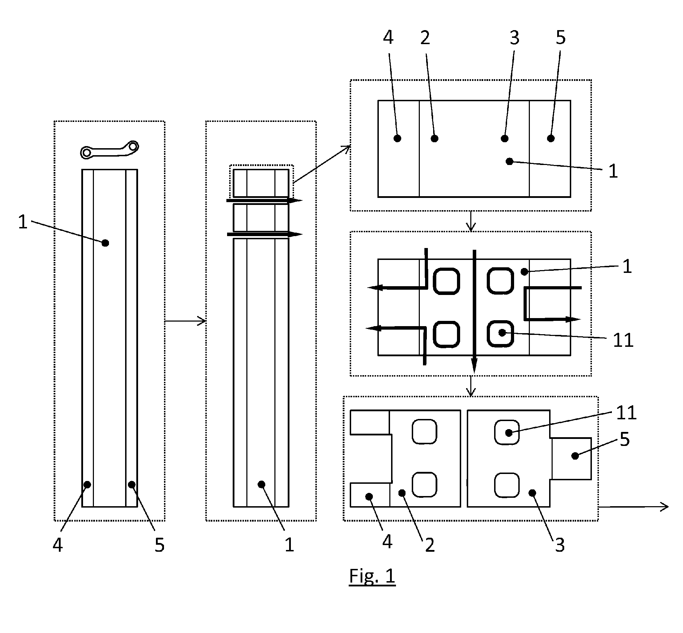

Fig. 1 ist eine Ansicht von ersten Schritten in einem erfindungsgemäßen Verfahren zum Herstellen von Scharnieren aus faserverstärktem Kunststoff, wobei die Abfolge der einzelnen Schritte durch Pfeile gekennzeichnet ist.

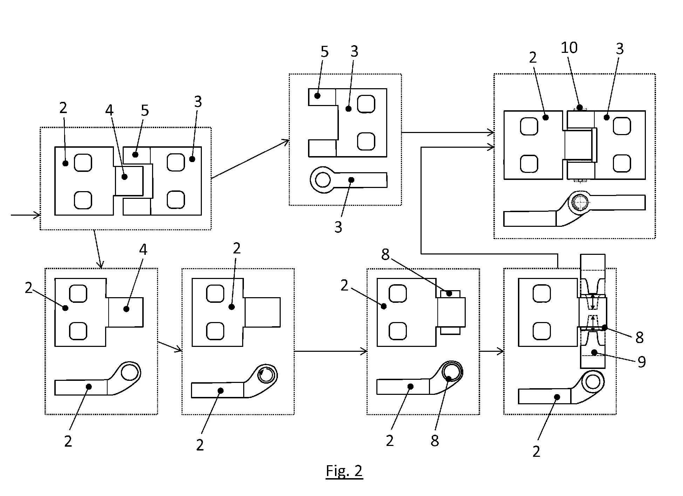

Zunächst wird ein im Wesentlichen flaches Pultrusionsprofil 1 erstellt. Im Wesentlichen flach schließt dabei selbstverständlich ein, dass das Pultrusionsprofil 1 Winkel und Ausformungen aufweisen kann. An beiden seitlichen Enden des Pultrusionsprofils 1 weist dieses Scharnieraugen 4, 5 auf, die bereits bei der Pultrusion miterstellt wurden. Das Pultrusionsprofil 1 wird quer zur Längsrichtung in gleichförmige Stücke geschnitten und somit abgelängt, wobei die Länge der einzelnen Stücke jeweils der Höhe eines Scharniers entspricht. Ein einzelnes derartiges Stück ist in der Fig. 1 rechts oben dargestellt. Durch Trennen in Längsrichtung werden aus diesen Stücken die einzelnen Scharnierhälften 2, 3 gebildet (in der Fig. 1 rechts auf mittlerer Höhe). Zusätzlich werden die einzelnen Stücke die aus dem Pultrusionsprofil 1 gewonnen wurden im Bereich der Scharnieraugen 4, 5, also an den seitlichen Enden der Stücke, beschnitten, wobei jeweils bei einer der beiden Scharnierhälften 2 oben und unten rechteckige Ausschnitte aus dem Ende der Scharnierhälfte 2 entfernt werden und bei der anderen Scharnierhälfte 3 in der Mitte ein rechteckiger Ausschnitt aus dem Ende der Scharnierhälfte 3 entfernt wird, so dass die an den Scharnieren verbleibenden Enden, die jeweils die Scharnieraugen 4,5 aufweisen, zusammenpassen und ineinander gesteckt werden können, wie gut in der ersten Abbildung der Fig. 2 ersichtlich ist. Ebenfalls können nun Anschraubpunkte 11 an den Scharnierhälften 2, 3 vorgesehen werden, insbesondere durch Bohren von Löchern für ein späteres Anschrauben des Scharniers.

Wie in Fig. 2 dargestellt, können nun die einzelnen Scharnierhälften 2, 3 getrennt weiter bearbeitet werden und beispielsweise eine der Scharnierhälften 2, insbesondere jene Scharnierhälfte mit einem mittigen Fortsatz im Bereich des Scharnierauges 4, gehohnt werden (zweites Bild unten in Fig. 2) und danach eine Buchse 8 als Gleitlager in das Scharnierauge 4 eingelegt werden und anschließend die Buchsenenden der Buchse 8 mit Hilfe eines Werkzeuges 9 umgebogen werden. Die beiden Schrnierhälften 2 und 3 werden schließlich mittels eines Spannstiftes 10 miteinander drehbar verbunden, wie in der letzten Abbildung (rechts oben) der Fig. 2 dargestellt.

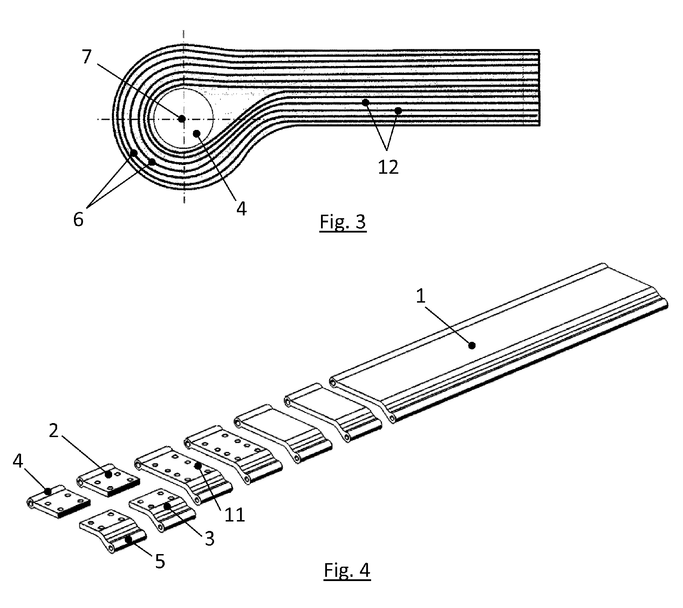

Fig. 3 ist eine schematische Schnittdarstellung eines Endes einer erfindungsgemäß hergestellten Scharnierhälfte, in der zu sehen ist, dass zur Bildung eines Scharnierauges 4 mehrere Faserlagen 6 am seitlichen Ende des Pultrusionsprofils 1 in Umfangsbahnen mit unterschiedlichem Radius um die Positionen 7 der Scharnieraugen 4, 5 geführt sind. Die Faserlagen 6 werden durch Fasermatten gebildet, wobei jede Lage der Fasermatten zu den benachbarten Faserlagen verdreht ist, so dass diese gemeinsam eine multidirektionale Fasermatte bilden. Die Länge dieser multidirektionalen Fasermatten entspricht der jeweiligen Umfangsbahn plus einem gewählten Übermaß, so dass die multidirektionalen Fasermatten in einen Übergangsbereich hineinragen, wo sie in Lagen unidirektionaler Fasern 12 eingebettet sind.

Fig. 4 ist eine schematische dreidimensionale Darstellung eines Pultrusionsprofils in verschiedenen Phasen eines erfindungsgemäßen Herstellungsverfahrens. Dabei ist zunächst (rechts oben) das noch unbeschnittene Pultrusionsprofil 1 dargestellt, und daraufhin (nach links unten) die Trennung in Querrichtung zum Ablängen einzelner Stücke die jeweils einem Scharnier entsprechen und die Trennung in Längsrichtung in Scharnierhälften 2, 3.

### Bezugszeichenliste

- 1: Pultrusionsprofil
- 2: Scharnierhälfte
- 3: Scharnierhälfte
- 4: Scharnierauge
- 5: Scharnierauge
- 6: Faserlage
- 7: Position eines Scharnierauges
- 8: Buchse
- 9: Werkzeug
- 10: Spannstift
- 11: Anschraubpunkt
- 12: unidirektionale Fasern

## Patentansprüche

1. Verfahren zum Herstellen von Scharnieren aus faserverstärktem Kunststoff,
**dadurch gekennzeichnet, dass** ein im wesentlichen flaches Pultrusionsprofil (1) erstellt wird und durch Ablängen des Pultrusionsprofils (1) und durch Trennen in Längsrichtung die einzelnen Scharnierhälften (2, 3) aus dem Pultrusionsprofil (1) gebildet werden, wobei zur Bildung von Scharnieraugen (4, 5) bei der Herstellung des Pultrusionsprofils (1) Faserlagen (6) an beiden seitlichen Enden des Pultrusionsprofils (1) in Umfangsbahnen um die Positionen (7) der Scharnieraugen (4, 5) geführt werden.

2. Verfahren nach Anspruch 1,
**dadurch gekennzeichnet, dass** die Faserlagen (6), die zur Bildung von Scharnieraugen (4, 5) an beiden seitlichen Enden des Pultrusionsprofils (1) um die Positionen (7) der Scharnieraugen (4, 5) geführt werden, durch Fasermatten gebildet werden.

3. Verfahren nach Anspruch 2,
**dadurch gekennzeichnet, dass** die Fasermatten an beiden seitlichen Enden des Pultrusionsprofils (1) multidirektional verlegt werden, wobei die Faserlagen (6) insbesondere jeweils 45 Grad oder 90 Grad zueinander verdreht sind.

4. Verfahren nach Anspruch 2 oder 3,
**dadurch gekennzeichnet, dass** die Länge der Fasermatten der jeweiligen Umfangsbahn, bevorzugt mit einem Übermaß, entspricht.

5. Verfahren nach zumindest einem der Ansprüche 2 bis 4,
**dadurch gekennzeichnet, dass** die Fasermatten in einem Übergangsbereich in Lagen unidirektionaler Fasern (12) eingebettet sind.

6. Verfahren nach zumindest einem der vorhergehenden Ansprüche,
**dadurch gekennzeichnet, dass** die Bohrungen der Scharnieraugen (4, 5) mitpultrudiert werden.

7. Verfahren nach zumindest einem der vorhergehenden Ansprüche,
**dadurch gekennzeichnet, dass** die Bohrungen der Scharnieraugen (4, 5) nach dem Pultrudieren durch Bohren erzeugt werden.

8. Verfahren nach zumindest einem der vorhergehenden Ansprüche,
**dadurch gekennzeichnet, dass** nach dem Ablängen und/oder nach dem Trennen ein Beschneiden des Pultrusionsprofils (1) im Bereich der Scharnieraugen (4, 5) erfolgt.

9. Verfahren nach zumindest einem der vorhergehenden Ansprüche,
**dadurch gekennzeichnet, dass** das Ablängen und/oder das Trennen und/oder gegebenenfalls das Beschneiden des Pultrusionsprofils (1) mittels Laser oder Wasserstrahl erfolgt.

10. Verfahren nach zumindest einem der vorhergehenden Ansprüche,
**dadurch gekennzeichnet, dass** jeweils zumindest in ein Scharnierauge (4, 5) einer der Scharnierhälften (2, 3) eine Buchse (8) als Gleitlager eingelegt wird und bevorzugt die Buchsenenden mit einem Werkzeug (9) umgebogen werden.

11. Verfahren nach zumindest einem der vorhergehenden Ansprüche,
**dadurch gekennzeichnet, dass** die beiden Scharnierhälften (2, 3) jeweils mit einem Spannstift (10) verbunden werden, der durch die Scharnieraugen (4, 5) der beiden Scharnierhälften (2, 3) geführt wird.
